# EUROPEAN PATENT APPLICATION

(11) **EP 4 497 642 A1**
(43) Date of publication of application: **29.01.2025**
(21) Application number: 24181650.3
(22) Date of filing: 12.06.2024
(51) Int. Cl.: B60T 13/68

(54) **APPARATUS FOR BRAKE CONTROL**

(30) Priority: 25.07.2023 KR 20230096634
(71) Applicant: HL Mando Corporation, Pyeongtaek-si, Gyeonggi-do 17962 (KR)
(72) Inventor: CHO, KYUNGRAN, 17962 Pyeongtaek-si, Gyeonggido (KR)
(74) Representative: BCKIP Part mbB

(57) **Abstract**

An apparatus for brake control may include a first valve group comprising valves included in a hydraulic circuit configured to supply hydraulic pressure for braking of a vehicle; a first valve drive circuit configured to drive the valves comprised in the first valve group; a first backward voltage prevention element connected between a power source and the first valve drive circuit to block backward voltage generated at a power source side of the first valve drive circuit; a second valve group included in the hydraulic circuit and comprising valves included in the hydraulic circuit; a second valve driving circuit configured to drive the valves comprised in the second valve group; and a second backward voltage prevention element connected between a power source and the second valve drive circuit to block backward voltage generated at a power source side of the second valve drive circuit.

## Description

This application claims priority to and the benefit from Korean Patent Application No. 10-2023-0096634, filed on July 25, 2023.

### BACKGROUND

### 1. Technical Field

The present disclosure generally relates to an apparatus for brake control, and more specifically, to a brake control apparatus for controlling a hydraulic circuit configured to supply hydraulic pressure for braking of a vehicle.

### 2. Discussion of Related Art

In developing vehicles, not only improvements in the autonomous driving performance of vehicles but also the level of requirements for vehicle safety and reliability need to be considered. Accordingly, various technologies have been developed to ensure the fail-safe function of vehicles. For example, redundancy is applied to various systems of a vehicle in order to ensure that system functions are maintained even when a fault occurs in one or some of the plurality of components of the vehicle by redundantly arranging components.

Redundancy design is also being adopted in the braking system, which is directly related to vehicle safety. However, in the conventional redundancy design of systems related to vehicle braking control, only the electronic control unit (ECU) has a redundant structure. Therefore, such a redundancy design has the problem of losing the entire system function when a common mode fault occurs between the main ECU and the redundant ECU. In order to solve these problems and minimize loss of function or reduction of the entire system, there is a need to develop a structure in which an actuator circuit itself can be separately controlled.

### SUMMARY

The present disclosure is to solve the problems of the related art described above, and some embodiments of the present disclosure provide an apparatus for brake control that is capable of, even if a fault occurs due to overvoltage or short circuit in one of a plurality of valve drive circuits configured to drive a plurality of valve groups arranged in a hydraulic circuit, respectively, preventing of the fault from affecting or being transmitted to the remaining drive circuits.

In addition, certain embodiments of the present disclosure provide an apparatus for brake control that is capable of, even when a fault occurs due to overvoltage or short circuit in one of a plurality of valve driving circuits configured to drive a plurality of valve groups, respectively, which are arranged in a hydraulic circuit configured to supply braking hydraulic pressure during the driving of the vehicle, preventing the entire loss of braking force by preventing the fault associated with one drive circuit from affecting or being transmitted to the remaining other drive circuits.

In addition, some embodiments of the present disclosure provide an apparatus for brake control that achieve both redundancy and economic efficiency by linking a separation structure between a plurality of valve drive circuits configured to drive a plurality of valve groups, respectively, arranged in a hydraulic circuit supplying braking hydraulic pressure during driving of the vehicle and a separation structure between a plurality of parking drive circuits configured to drive a plurality of parking brake motors, respectively, that generate braking force for parking the vehicle.

The objects of the present disclosure are not limited to the above-described objects, and other objects that are not mentioned will be able to be clearly understood by those skilled in the art to which the present disclosure pertains from the following description.

According to an aspect of the present disclosure, provided is an apparatus for brake control, including: a first valve group comprising at least one valve disposed in a hydraulic circuit that supplies hydraulic pressure required for braking of a vehicle; a first valve driving circuit that drives valves comprised in the first valve group; a first backward voltage prevention element disposed between a power source of the first valve driving circuit and the first valve driving circuit to block backward voltage generated on the power source side of the first valve driving circuit; a second valve group disposed in the hydraulic circuit and comprising at least one valve not comprised in the first valve group; a second valve driving circuit that drives valves comprised in the second valve group; and a second backward voltage prevention element disposed between a power source of the second valve driving circuit and the second valve driving circuit to block backward voltage generated on the power source side of the second valve driving circuit.

In the apparatus for brake control according to an aspect of the present disclosure, a fault occurring in the first valve driving circuit may not be transmitted to the second valve driving circuit, and a fault occurring in the second valve driving circuit may not be transmitted to the first valve driving circuit.

In the apparatus for brake control according to an aspect of the present disclosure, the first valve group may include half of the plurality of valves disposed in the hydraulic circuit, and the second valve group may include the other half of the plurality of valves disposed in the hydraulic circuit.

In the apparatus for brake control according to an aspect of the present disclosure, at least one of the first backward voltage prevention element and the second backward voltage prevention element may be comprised of a diode.

In the apparatus for brake control according to an aspect of the present disclosure, at least one of the first backward voltage prevention element and the second backward voltage prevention element may be comprised of a metal-oxide-semiconductor field-effect transistor (MOSFET).

The apparatus for brake control according to an aspect of the present disclosure may further include a first preliminary valve driving circuit that drives valves comprised in the first valve group when the first valve driving circuit fails; and a first preliminary backward voltage prevention element disposed between a power source of the first preliminary valve driving circuit and the first preliminary valve driving circuit to block backward voltage generated on the power source side of the first preliminary valve driving circuit.

The apparatus for brake control according to an aspect of the present disclosure may further include a second preliminary valve driving circuit that drives valves comprised in the second valve group when the second valve driving circuit fails; and a second preliminary backward voltage prevention element disposed between a power source of the second preliminary valve driving circuit and the second preliminary valve driving circuit to block backward voltage generated on the power source side of the second preliminary valve driving circuit.

In the apparatus for brake control according to an aspect of the present disclosure, a fault occurring in the first preliminary valve driving circuit may not be transmitted to the second preliminary valve driving circuit, and a fault occurring in the second preliminary valve driving circuit may not be transmitted to the first preliminary valve driving circuit.

The apparatus for brake control according to an aspect of the present disclosure may further include a motor comprising a first winding and a second winding and generating hydraulic pressure supplied to the hydraulic circuit; a first motor driving circuit that controls electric power supplied to the first winding; and a second motor driving circuit that controls electric power supplied to the second winding.

The apparatus for brake control according to an aspect of the present disclosure may further include a first motor backward voltage prevention element disposed between the first motor driving circuit and a power source to block backward voltage generated in the first motor driving circuit; and a second motor backward voltage prevention element disposed between the second motor driving circuit and a power source to block backward voltage generated in the second motor driving circuit.

In the apparatus for brake control according to an aspect of the present disclosure, a fault occurring in the first motor driving circuit may not be transmitted to the second motor driving circuit, and a fault occurring in the second motor driving circuit may not be transmitted to the first motor driving circuit.

The apparatus for brake control according to an aspect of the present disclosure may further include a first parking brake motor that is provided separately from the hydraulic circuit and generates a part of the braking force necessary for parking the vehicle; a first parking driving circuit that drives the first parking brake motor; a second parking brake motor that is provided separately from the hydraulic circuit and the first parking brake motor and generates a part of the braking force necessary for parking the vehicle; and a second parking driving circuit that drives the second parking brake motor.

The apparatus for brake control according to an aspect of the present disclosure may further include a first parking backward voltage prevention element disposed between a power source of the first parking driving circuit and the first parking driving circuit to block backward voltage generated on the power source side of the first parking driving circuit; and a second parking backward voltage prevention element disposed between a power source of the second parking driving circuit and the second parking driving circuit to block backward voltage generated on the power source side of the second parking driving circuit.

In the apparatus for brake control according to an aspect of the present disclosure, a fault occurring in the first parking driving circuit may not be transmitted to the second parking driving circuit, and a fault occurring in the second parking driving circuit may not be transmitted to the first parking driving circuit.

The apparatus for brake control according to an aspect of the present disclosure may further include a first preliminary parking driving circuit that drives the first parking brake motor when the first parking driving circuit fails or together with the first parking driving circuit; and a second preliminary parking driving circuit that drives the second parking brake motor when the second parking driving circuit fails or together with the second parking driving circuit.

The apparatus for brake control according to an aspect of the present disclosure, may further include a first preliminary parking backward voltage prevention element disposed between a power source of the first preliminary parking driving circuit and the first preliminary parking driving circuit to block backward voltage generated on the power source side of the first preliminary parking driving circuit; and a second preliminary parking backward voltage prevention element disposed between a power source of the second preliminary parking driving circuit and the second preliminary parking driving circuit to block backward voltage generated on the power source side of the second preliminary parking driving circuit.

In the apparatus for brake control according to an aspect of the present disclosure, a fault occurring in the first preliminary parking driving circuit may not be transmitted to the second preliminary parking driving circuit, and a fault occurring in the second preliminary parking driving circuit may not be transmitted to the first preliminary parking driving circuit.

According to another aspect of the present disclosure, provided is an apparatus for brake control, including: a first valve group comprising at least one valve disposed in a hydraulic circuit that supplies hydraulic pressure required for braking of a vehicle; a first valve driving circuit that drives valves comprised in the first valve group; a first parking brake motor that is provided separately from the hydraulic circuit and generates a part of the braking force necessary for parking the vehicle; a first parking driving circuit that drives the first parking brake motor; a first backward voltage prevention element that is arranged to connect the first valve driving circuit and the first parking driving circuit in parallel with a power source, and blocks backward voltage generated in the first valve driving circuit or the first parking driving circuit from being transmitted to the power source; a second valve group disposed in the hydraulic circuit and comprising at least one valve not comprised in the first valve group; a second valve driving circuit that drives valves comprised in the second valve group; a second parking brake motor that is provided separately from the hydraulic circuit and the first parking brake motor and generates a part of the braking force necessary for parking the vehicle; a second parking driving circuit that drives the second parking brake motor; and a second backward voltage prevention element that is arranged to connect the second valve driving circuit and the second parking driving circuit in parallel with a power source, and blocks backward voltage generated in the second valve driving circuit or the second parking driving circuit from being transmitted to the power source.

In the apparatus for brake control according to another aspect of the present disclosure, a fault occurring in the first valve driving circuit may not be transmitted to the second valve driving circuit, and a fault occurring in the second valve driving circuit may not be transmitted to the first valve driving circuit.

In the apparatus for brake control according to another aspect of the present disclosure, the first valve group may include half of the plurality of valves disposed in the hydraulic circuit, and the second valve group may include the other half of the plurality of valves disposed in the hydraulic circuit.

In the apparatus for brake control according to another aspect of the present disclosure, at least one of the first backward voltage prevention element and the second backward voltage prevention element may be comprised of a diode.

In the apparatus for brake control according to another aspect of the present disclosure, at least one of the first backward voltage prevention element and the second backward voltage prevention element may be comprised of a metal-oxide-semiconductor field-effect transistor (MOSFET).

The apparatus for brake control according to another aspect of the present disclosure may further include a first preliminary valve driving circuit that drives valves comprised in the first valve group when the first valve driving circuit fails; and a first preliminary parking driving circuit that drives the first parking brake motor when the first parking driving circuit fails or together with the first parking driving circuit.

The apparatus for brake control according to another aspect of the present disclosure may further include a first preliminary backward voltage prevention element that is arranged to connect the first preliminary valve driving circuit and the first preliminary parking driving circuit in parallel with a power source, and blocks backward voltage generated in the first preliminary valve driving circuit or the first preliminary parking driving circuit from being transmitted to the power source.

The apparatus for brake control according to another aspect of the present disclosure may further include a second preliminary valve driving circuit that drives valves comprised in the second valve group when the second valve driving circuit fails; and a second preliminary parking driving circuit that drives the second parking brake motor when the second parking driving circuit fails or together with the second parking driving circuit.

The apparatus for brake control according to another aspect of the present disclosure may further include a second preliminary backward voltage prevention element that is arranged to connect the second preliminary valve driving circuit and the second preliminary parking driving circuit in parallel with a power source, and blocks backward voltage generated in the second preliminary valve driving circuit or the second preliminary parking driving circuit from being transmitted to the power source.

In the apparatus for brake control according to another aspect of the present disclosure, a fault occurring in the first preliminary valve driving circuit or the first preliminary parking driving circuit may not be transmitted to the second preliminary valve driving circuit and the second preliminary parking driving circuit, and a fault occurring in the second preliminary valve driving circuit or the second preliminary parking driving circuit may not be transmitted to the first preliminary valve driving circuit and the first preliminary parking driving circuit.

The apparatus for brake control according to another aspect of the present disclosure may further include a motor comprising a first winding and a second winding and generating hydraulic pressure supplied to the hydraulic circuit; a first motor driving circuit that controls power supplied to the first winding; and a second motor driving circuit that controls power supplied to the second winding.

The apparatus for brake control according to another aspect of the present disclosure may further include a first motor backward voltage prevention element disposed between the first motor driving circuit and a power source to block backward voltage generated in the first motor driving circuit; and a second motor backward voltage prevention element disposed between the second motor driving circuit and a power source to block backward voltage generated in the second motor driving circuit.

The power sources mentioned in the present disclosure may be a same single power source or different power sources.

In the apparatus for brake control according to another aspect of the present disclosure, a fault occurring in the first motor driving circuit may not affect or be transmitted to the second motor driving circuit, and a fault occurring in the second motor driving circuit may not affect or be transmitted to the first motor driving circuit.

### BRIEF DESCRIPTION OF THE DRAWINGS

The above and other objects, features and advantages of the present disclosure will become more apparent to those of ordinary skill in the art by describing exemplary embodiments thereof in detail with reference to the accompanying drawings, in which:
FIG. 1 is a diagram showing a configuration of an apparatus for braking control according to a first embodiment of the present disclosure;
FIG. 2 shows an exemplary case in which a fault occurs in a first valve drive circuit of an apparatus for brake control according to the first embodiment of the present disclosure;
FIG. 3 shows an exemplary case in which a fault occurs in a second valve drive circuit of an apparatus for brake control according to the first embodiment of the present disclosure;
FIG. 4 is a diagram showing a configuration of an apparatus for braking control according to a second embodiment of the present disclosure;
FIG. 5 shows an exemplary case in which a fault occurs in a first valve drive circuit of an apparatus for brake control according to the second embodiment of the present disclosure; and
FIG. 6 shows an exemplary case in which a fault occurs in a second valve drive circuit of an apparatus for brake control according to the second embodiment of the present disclosure.

### DETAILED DESCRIPTION OF EXEMPLARY EMBODIMENTS

Hereinafter, embodiments of the present disclosure will be described in detail so that those skilled in the art to which the present disclosure pertains can easily carry out the embodiments. The present disclosure may be implemented in many different forms and is not limited to the embodiments described herein. In order to clearly describe the present disclosure, portions not related to the description are omitted from the accompanying drawings, and the same or similar components are denoted by the same reference numerals throughout the specification.

The words and terms used in the specification and the claims are not limitedly construed as their ordinary or dictionary meanings, and should be construed as meaning and concept consistent with the technical spirit of the present disclosure in accordance with the principle that the inventors can define terms and concepts in order to best describe their invention.

In the specification, it should be understood that the terms such as "comprise" or "have" are intended to specify the presence of features, numbers, steps, operations, components, parts, or combinations thereof described in the specification and do not preclude the possibility of the presence or addition of one or more other features, numbers, steps, operations, components, parts, or combinations thereof.

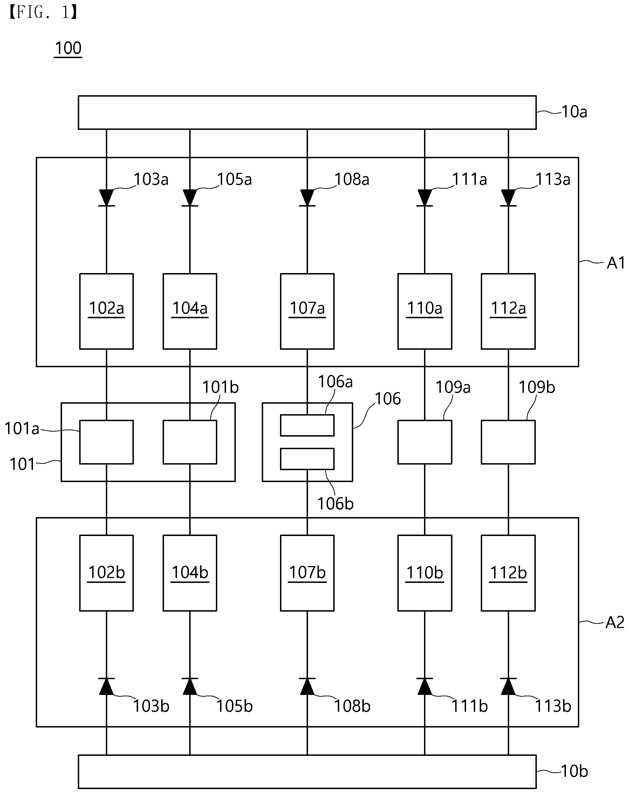

FIG. 1 is a diagram showing a configuration of an apparatus for braking control according to a first embodiment of the present disclosure.

An apparatus 100 for brake control according to the first embodiment of the present disclosure controls the supply of hydraulic pressure for braking of a vehicle. The apparatus 100 for brake control may control hydraulic pressure transmitted to brakes installed on the wheels of a vehicle. The brake may receive hydraulic pressure from the apparatus 100 for brake control and convert the received hydraulic pressure into mechanical frictional force for braking.

Referring to FIG. 1, the apparatus 100 for brake control according to the first embodiment of the present disclosure may include a first valve group 101a and a second valve group 101b included or disposed in a hydraulic circuit 101, a first valve drive circuit 102a, a first backward voltage prevention element 103a, a second valve drive circuit 104a, and a second backward voltage prevention element 105a.

The hydraulic circuit 101 supplies hydraulic pressure for braking the vehicle. The hydraulic circuit 101 may be connected to a brake installed on each wheel of the vehicle. The hydraulic circuit 101 may provide hydraulic pressure to generate braking force by the brake installed on each wheel of the vehicle. In the first embodiment of the present disclosure, the hydraulic circuit 101 may include a first valve group 101a and a second valve group 101b.

The first valve group 101a includes at least one valve arranged in the hydraulic circuit 101. In addition, the second valve group 101b is arranged in the hydraulic circuit 101 and includes at least one valve that is not included in the first valve group 101a.

For example, in the first embodiment of the present disclosure, the first valve group 101a includes half of the plurality of valves comprised or disposed in the hydraulic circuit 101, and the second valve group 101b includes the other half of the plurality of valves comprised or disposed in the hydraulic circuit 101, but not limited thereto. This is one of examples of the first embodiment of the present disclosure, and the number of valves in the first valve group 101a and the number of valves in the second valve group 101b can be varied.

The first valve drive circuit 102a drives the valves included in the first valve group 101a. The first valve drive circuit 102a may include, for example, but not limited to, one or more switching elements or switches.

The first backward voltage prevention element 103a is connected between the power source of the first valve drive circuit 102a and the first valve driving circuit 102a. The first backward voltage prevention element 103a is configured to block the backward voltage generated on or occurred at the power source side of the first valve driving circuit 102a. For instance, the backward voltage may be generated due to overvoltage or short circuit fault, and the power source side may be a terminal of a circuit configured to receive power or connected to a power source. The first backward voltage prevention element 103a may be a one-way voltage or current switch configured to conduct current primarily in one direction (asymmetric conductance). The first backward voltage prevention element 103a may have low (ideally zero) resistance in one direction and high (ideally infinite) resistance in the other direction. The first backward voltage prevention element 103a may comprise, for example, but not limited to, a diode and/or a metal-oxide-semiconductor field-effect transistor (MOSFET). Meanwhile, the power source of the first valve drive circuit 102a may be a first power source 10a.

The second valve drive circuit 104a drives the valves included in the second valve group 101b. The second valve driving circuit 104b may include, for example, but not limited to, one or more switching elements or switches.

The second backward voltage prevention element 105a is connected between the power source of the second valve drive circuit 104a and the second valve drive circuit 104a. The second backward voltage prevention element 105a is configured to block the backward voltage generated on or occurred at the power source side of the second valve drive circuit 104a. For instance, the backward voltage may be generated or occur due to overvoltage or short circuit fault, and the power source side may be a terminal of a circuit configured to receive power or connected to a power source. The second backward voltage prevention element 105a may be a one-way voltage or current switch configured to conduct voltage or current primarily in one direction (asymmetric conductance). The second backward voltage prevention element 105a may have low (ideally zero) resistance in one direction and high (ideally infinite) resistance in the other direction. The second backward voltage prevention element 105a may comprise, for example, but not limited to, a diode and/or a MOSFET. Meanwhile, the power source of the second valve drive circuit 104a may be a first power source 10a.

In the apparatus 100 for brake control according to the first embodiment of the present disclosure, the first backward voltage prevention element 103a and the second backward voltage prevention element 105a are separately and independently arranged between the hydraulic circuit 101 and the first power source 10a. Due to this configuration, a fault occurring between the power source of the first valve drive circuit 102a and the first valve drive circuit 102a due to overvoltage or short circuit does not affect or is not transmitted to the second valve drive circuit 104a. In addition, a fault due to overvoltage or short circuit occurring between the power source of the second valve drive circuit 104a and the second valve drive circuit 104a does not affect or is not transmitted to the first valve drive circuit 102a.

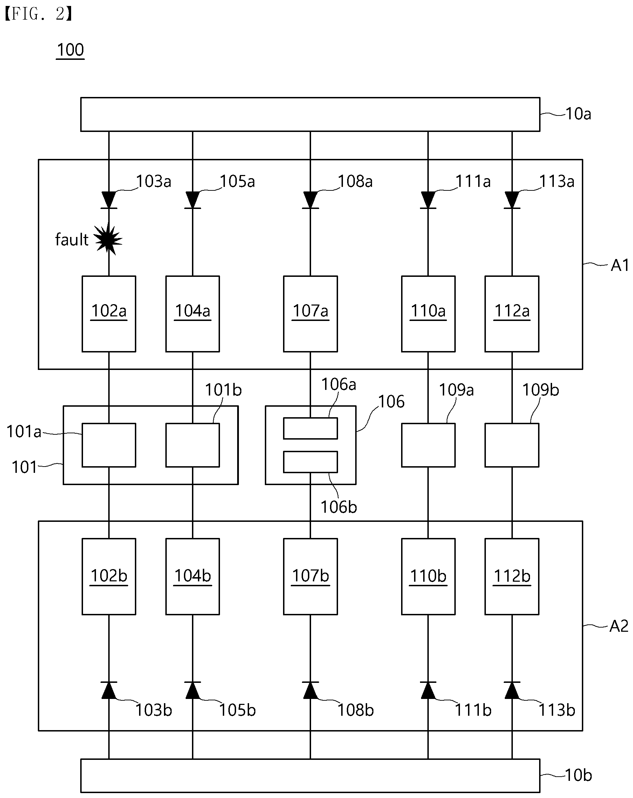

FIG. 2 shows an exemplary case in which a fault occurs in a first valve drive circuit of an apparatus for brake control according to the first embodiment of the present disclosure.

Referring to FIG. 2, an exemplary case in which a fault occurs in the first valve drive circuit 102a is shown. In more detail, FIG. 2 shows a situation in which a fault occurs due to overvoltage or short circuit between the first power source 10a and the first valve driving circuit 102a. This fault may be blocked from affecting or being transmitted to the first power source 10a by the first backward voltage prevention element 103a.
driving second valve drive circuit 104a is separated from the first valve drive circuit 102a, and the second backward voltage prevention element 105a is provided between the second valve drive circuit 104a and the first power source 10a independently of the first backward voltage prevention element 103a, thereby preventing a fault occurring between the first power source 10a and the first valve drive circuit 102a from affecting the second valve drive circuit 104a.

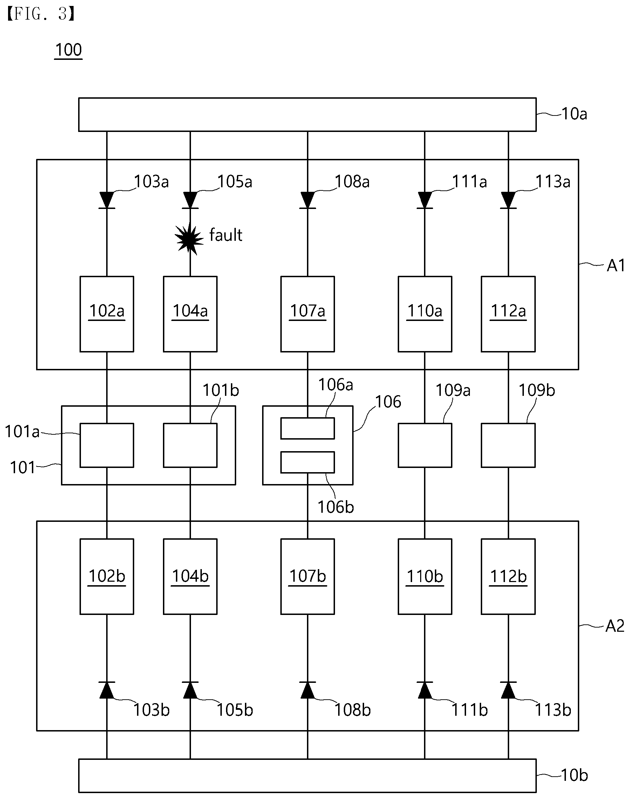

FIG. 3 shows an exemplary case in which a fault occurs in a second valve drive circuit of an apparatus for brake control according to the first embodiment of the present disclosure.

Referring to FIG. 3, an exemplary case in which a fault occurs in the second valve drive circuit 104a is shown. In more detail, FIG. 3 shows a situation in which a fault occurs due to overvoltage or short circuit between the first power source 10a and the second valve driving circuit 104a. This fault may be blocked from affecting or being transmitted to the first power source 10a by the second backward voltage prevention element 105a.
driving second valve drive circuit 104a is separated from the first valve drive circuit 102a, and the second backward voltage prevention element 105a is provided between the second valve driving circuit 104a and the first power source 10a independently of the first backward voltage prevention element 103a, thereby preventing a fault occurring between the first power source 10a and the second valve drive circuit 104a from affecting the first valve drive circuit 102a.

As such, according to some embodiments of the present disclosure, even if a fault due to overvoltage or short circuit occurs in one of the first valve drive circuit 102a and the second valve drive circuit 104a, the other of the first valve drive circuit 102a and the second valve drive circuit 104a may not be affected by the fault occurring in the one. Accordingly, certain embodiments of the present disclosure may improve fail-safe performance as well as safety and reliability in relation to the supply of braking hydraulic pressure.

The apparatus 100 for brake control according to the first embodiment of the present disclosure may further include a first preliminary valve drive circuit 102b, a first preliminary backward voltage prevention element 103b, a second preliminary valve drive circuit 104b and a second preliminary backward voltage prevention element 105b.

The first preliminary valve drive circuit 102b drives the valves included in the first valve group 101a in response to the failure of the first valve drive circuit 102a. The first preliminary valve drive circuit 102b may drive the valves included in the first valve group 101a simultaneously with the first valve drive circuit 102a or instead of the first valve drive circuit 102a. The first preliminary valve drive circuit 102b may include, for example, but not limited to, one or more switching elements or switches.

The first preliminary backward voltage prevention element 103b is connected between the power source of the first preliminary valve drive circuit 102b and the first preliminary valve drive circuit 102b. The first preliminary backward voltage prevention element 103b is configured to block the backward voltage generated on or occurred at the power source side of the first preliminary valve drive circuit 103b. In this case, the backward voltage may be generated or occur due to overvoltage or short circuit fault, and the power source side may be a terminal of a circuit configured to receive power or connected to a power source. The first preliminary backward voltage prevention element 103b may be a one-way voltage or current switch configured to conduct voltage or current primarily in one direction (asymmetric conductance). The first preliminary backward voltage prevention element 103b may have low (ideally zero) resistance in one direction and high (ideally infinite) resistance in the other direction. The first preliminary backward voltage prevention element 103b may comprise, for example, but not limited to, a diode and/or a MOSFET. The power source of the first preliminary valve drive circuit 102b may be a second power source 10b.

The second preliminary valve drive circuit 104b drives the valves included in the second valve group 101b in response to the failure of the second valve drive circuit 104a. The second preliminary valve drive circuit 104b may drive the valves included in the second valve group 101b simultaneously with the second valve drive circuit 104a or instead of the second valve drive circuit 104a. The second preliminary valve drive circuit 104b may include, for example, but not limited to, one or more switching elements or switches.

The second preliminary backward voltage prevention element 105b is connected between the power source of the second preliminary valve drive circuit 104b and the second preliminary valve drive circuit 104b. The second preliminary backward voltage prevention element 105b is configured to block the backward voltage generated on or occurred at the power source side of the second preliminary valve drive circuit 104b. In this case, the backward voltage may be generated or occur due to overvoltage or short circuit fault, and the power source side may be a terminal of a circuit configured to receive power or connected to a power source. The second preliminary backward voltage prevention element 105b may be a one-way voltage or current switch configured to conduct voltage or current primarily in one direction (asymmetric conductance). The second preliminary backward voltage prevention element 105b may have low (ideally zero) resistance in one direction and high (ideally infinite) resistance in the other direction. The second preliminary backward voltage prevention element 105b may comprise, for example, but not limited to, a diode and/or a MOSFET. The power source of the second preliminary valve drive circuit 104b may be a second power source 10b.

Like the first valve drive circuit 102a and the second valve drive circuit 104a, the first preliminary valve drive circuit 102b and the second preliminary valve drive circuit 104b are separated from each other, and the first preliminary backward voltage prevention element 103b and the second preliminary backward voltage prevention element 105b are separately and independently provided between the first preliminary valve drive circuit 102b and the power source and between the second preliminary valve drive circuit 104b and the power source, respectively. Accordingly, a fault occurring in the first preliminary valve drive circuit 102b does not affect or is not transmitted to the second preliminary valve drive circuit 104b, and a fault occurring in the second preliminary valve drive circuit 104b does not affect or is not transmitted to the first preliminary valve drive circuit 102b.

The apparatus 100 for brake control according to the first embodiment of the present disclosure may include a motor 106, a first motor drive circuit 107a, a first motor backward voltage prevention element 108a, a second motor drive circuit 107b, and a second motor backward voltage prevention element 108b.

The motor 106 includes a first winding 106a and a second winding 106b. For example, the motor 106 may be configured to generate hydraulic pressure supplied to the hydraulic circuit 101 and the motor 106 may be an actuator of a pump that generates hydraulic pressure, but not limited thereto.

The first motor drive circuit 107a controls the electric power supplied to the first winding 106a of the motor 106. The first motor drive circuit 107a may include one or more switching elements or switches.

The first motor backward voltage prevention element 108a is connected between the first motor drive circuit 107a and the power source of the first motor drive circuit 107a. The first motor backward voltage prevention element 108a is configured to block the backward voltage generated on or occurred at the power source side of the first motor drive circuit 107a. In this case, the power source of the first motor drive circuit 107a may be a first power source 10a, and the power source side may be a terminal of a circuit configured to receive power or connected to a power source. The first motor backward voltage prevention element 108a may be a one-way voltage or current switch configured to conduct voltage or current primarily in one direction (asymmetric conductance). The first motor backward voltage prevention element 108a may have low (ideally zero) resistance in one direction and high (ideally infinite) resistance in the other direction. In addition, the first motor backward voltage prevention element 108a can block faults due to overvoltage or short circuit from affecting or being transmitted to the first power source 10a. The first motor backward voltage prevention element 108a may comprise, for example, but not limited to, a diode and/or a MOSFET.

The second motor drive circuit 107b controls the electric power supplied to the second winding 106b of the motor 106. The second motor drive circuit 107b may include one or more switching elements or switches.

The second motor backward voltage prevention element 108b is connected between the second motor drive circuit 107b and the power source of the second motor drive circuit 107b. The second motor backward voltage prevention element 108b is configured to block the backward voltage generated on or occurred at the power source side of the second motor drive circuit 107b. In this case, the power source of the second motor driving circuit 107b may be a second power source 10b, and the power source side may be a terminal of a circuit configured to receive power or connected to a power source. The second motor backward voltage prevention element 108b may be a one-way voltage or current switch configured to conduct voltage or current primarily in one direction (asymmetric conductance). The second motor backward voltage prevention element 108b may have low (ideally zero) resistance in one direction and high (ideally infinite) resistance in the other direction. In addition, the second motor backward voltage prevention element 108b can block faults due to overvoltage or short circuit from affecting or being transmitted to the second power source 10b. The second motor backward voltage prevention element 108b may comprise, for example, but not limited to, a diode and/or a MOSFET.

Because each drive circuit for each winding of the motor 106 is separately structured, a fault occurring in the first motor drive circuit 107a does not affect or is not transmitted to the second motor drive circuit 107b, and a fault occurring in the second motor drive circuit 107b does not affect or is not transmitted to the first motor driving circuit 107a, thereby securing the safety and reliability of motor.

The apparatus 100 for brake control according to the first embodiment of the present disclosure may include a first parking brake motor 109a, a first parking drive circuit 110a, a first parking backward voltage prevention element 111a, a second parking brake motor 109b, a second parking drive circuit 112a, and a second parking backward voltage prevention element 113a.

The first parking brake motor 109a is provided separately from the hydraulic circuit 101 and generates at least a part of the braking force for parking the vehicle. The power or torque generated by the first parking brake motor 109a may be converted into the frictional force for operation of the parking brake. For example, the first parking brake motor 109a may be included in an electric parking brake (EPB). As an example, the first parking brake motor 109a may supply parking braking force to the left wheel of the vehicle.

The first parking drive circuit 110a drives the first parking brake motor 109a. The first parking drive circuit 110a may include one or more switching elements or switches.

The first parking backward voltage prevention element 111a is connected between the power source of the first parking drive circuit 110a and the first parking driving circuit 110a. The first parking backward voltage prevention element 111a is configured to block the backward voltage generated on or occurred at the power source side of the first parking drive circuit 110a. In this case, the power source of the first parking drive circuit 110a may be a first power source 10a, and the power source side may be a terminal of a circuit configured to receive power or connected to a power source. The first parking backward voltage prevention element 111a may be a one-way voltage or current switch configured to conduct voltage or current primarily in one direction (asymmetric conductance). The first parking backward voltage prevention element 111a may have low (ideally zero) resistance in one direction and high (ideally infinite) resistance in the other direction. In addition, the first parking backward voltage prevention element 111a can block a fault due to overvoltage or short circuit from affecting or being transmitted to the first power source 10a. The first parking backward voltage prevention element 111a may comprise, for example, but not limited to, a diode and/or a MOSFET.

The second parking brake motor 109b is provided separately from the hydraulic circuit 101 and generates at least a part of the braking force for parking the vehicle. The power or torque generated by the second parking brake motor 109b may be converted into the frictional force for the operation of the parking brake. For example, the second parking brake motor 109b may be included in an electric parking brake (EPB). As an example, the second parking brake motor 109b may supply parking braking force to the right wheel of the vehicle.

The second parking drive circuit 112a drives the second parking brake motor 109b. The second parking drive circuit 112a may include one or more switching elements of switches.

The second parking backward voltage prevention element 113a is connected between the power source of the second parking drive circuit 112a and the second parking driving circuit 112a. The second parking backward voltage prevention element 113a is configured to block the backward voltage generated on or occurred at the power source side of the second valve drive circuit 112a. In this case, the power source of the second parking drive circuit 112a may be a first power source 10a, and the power source side may be a terminal of a circuit configured to receive power or connected to a power source. The second parking backward voltage prevention element 113a may be a one-way voltage or current switch configured to conduct voltage or current primarily in one direction (asymmetric conductance). The second parking backward voltage prevention element 113a may have low (ideally zero) resistance in one direction and high (ideally infinite) resistance in the other direction. In addition, the second parking backward voltage prevention element 113a can block a fault due to overvoltage or short circuit from affecting or being transmitted to the first power source 10a. The second parking backward voltage prevention element 113a may comprise, for example, but not limited to, a diode and/or a MOSFET.

According to the apparatus 100 for brake control according to the first embodiment of the present disclosure, the first parking drive circuit 110a and the second parking drive circuit 112a are separated from each other, and the first parking backward voltage prevention element 111a and the second parking backward voltage prevention element 113a are provided independently of each other. Thus, even if a fault due to overvoltage or short circuit occurs in one of the first parking drive circuit 110a and the second parking drive circuit 112a, the other of the first parking drive circuit 110a and the second parking drive circuit 112a is not affected by the fault of the one.

In other words, a fault occurring in the first parking drive circuit 110a does not affect or is not transmitted to the second parking drive circuit 112a, and a fault occurring in the second parking driv3 circuit 112a does not affect or is not transmitted to the first parking drive circuit 110a, thereby improving fail-safe performance and safety and reliability in relation to the supply of braking hydraulic pressure.

The apparatus 100 for brake control according to the first embodiment of the present disclosure may include a first preliminary parking drive circuit 110b, a first preliminary parking backward voltage prevention element 111b, a second preliminary parking drive circuit 112b and a second preliminary parking backward voltage prevention element 113b.

The first preliminary parking drive circuit 110b drives the first parking brake motor 109a in response to the failure of the first parking drive circuit 110a or drives the first parking brake motor 109a together with the first parking driving circuit 110a. The first preliminary parking drive circuit 110b may include one or more switching elements or switches.

The first preliminary parking backward voltage prevention element 111b is connected between the power source of the first preliminary parking drive circuit 110b and the first preliminary parking drive circuit 110b, The first preliminary parking backward voltage prevention element 111b may be configured to block the backward voltage generated on or occurring at the power source side of the first preliminary parking drive circuit 110b. In this case, the power source of the first preliminary parking drive circuit 110b may be a second power source 10b and the power source side may be a terminal of a circuit configured to receive power or connected to a power source. The first preliminary parking backward voltage prevention element 111b may be a one-way voltage or current switch configured to conduct voltage or current primarily in one direction (asymmetric conductance). The first preliminary parking backward voltage prevention element 111b may have low (ideally zero) resistance in one direction and high (ideally infinite) resistance in the other direction. In addition, the first preliminary parking backward voltage prevention element 111b can block a fault due to overvoltage or short circuit from affecting or being transmitted to the second power source 10b. The first preliminary parking backward voltage prevention element 111b may comprise, for example, but not limited to, a diode and/or a MOSFET.

The second preliminary parking drive circuit 112b drives the second parking brake motor 109b in response to the failure of the second parking drive circuit 112a or drives the second parking brake motor 109b together with the second parking drive circuit 112a. The second preliminary parking drive circuit 112b may include one or more switching elements or switches.

The second preliminary parking backward voltage prevention element 113b connected between the power source of the second preliminary parking drive circuit 112b and the second preliminary parking drive circuit 112b. The second preliminary parking backward voltage prevention element 113b may be configured to block the backward voltage generated on or occurring at the power source side of the second preliminary parking drive circuit 112b. In this case, the power source of the second preliminary parking drive circuit 112b may be a second power source 10b and the power source side may be a terminal of a circuit configured to receive power or connected to a power source. The second preliminary parking backward voltage prevention element 113b may be a one-way voltage or current switch configured to conduct voltage or current primarily in one direction (asymmetric conductance). The second preliminary parking backward voltage prevention element 113b may have low (ideally zero) resistance in one direction and high (ideally infinite) resistance in the other direction. In addition, the second preliminary parking backward voltage prevention element 113b can block a fault due to overvoltage or short circuit from affecting or being transmitted to the second power source 10b. The second parking backward voltage prevention element 113b may comprise, for example, but not limited to, a diode and/or a MOSFET.

According to the apparatus 100 for brake control according to the first embodiment of the present disclosure, the first preliminary parking drive circuit 110b and the second preliminary parking drive circuit 112b are separated from each other, and the first preliminary parking backward voltage prevention element 111b and the second preliminary parking backward voltage prevention element 113b are provided independently of each other. Accordingly, even if a fault due to overvoltage or short circuit occurs in one of the first preliminary parking drive circuit 110b and the second preliminary parking drive circuit 112b, the other one of the first preliminary parking drive circuit 110b and the second preliminary parking drive circuit 112b is not affected by the fault of the one.

In other words, a fault occurring in the first preliminary parking drive circuit 110b does not affect or is not transmitted to the second preliminary parking drive circuit 112b, and a fault occurring in the second preliminary parking drive circuit 112b does not affect or is not transmitted to the first preliminary parking drive circuit 110b, thereby improving fail-safe performance as well as safety and reliability in relation to the supply of braking hydraulic pressure.

In the first embodiment of the present disclosure, the first power source 10a and the second power source 10b may be arranged separately and/or independently from each other. For example, the first power source 10a and the second power source 10b may comprise separate and independent batteries, respectively. The first power source 10a and the second power source 10b may be the same power source. For example, the first power source 10a and the second power source 10b may be implemented as a single battery.

In addition, in the first embodiment of the present disclosure, the first valve drive circuit 102a, the first backward voltage prevention element 103a, the second valve drive circuit 104a, the second backward voltage prevention element 105a, the first motor drive circuit 107a, the first motor backward voltage prevention element 108a, the first parking drive circuit 110a, the first parking backward voltage prevention element 111a, the second parking drive circuit 112a, and the second parking backward voltage prevention element 113a may be included or disposed in a first electronic control unit (ECU) A1. For instance, the first ECU A1 may be a main ECU.

In addition, the first preliminary valve drive circuit 102b, the first preliminary backward voltage prevention element 103b, the second preliminary valve drive circuit 104b, the second preliminary backward voltage prevention element 105b, the second motor drive circuit 107b, the second motor backward voltage prevention element 108b, the first preliminary parking drive circuit 110b, the first preliminary parking backward voltage prevention element 111b, the second preliminary parking drive circuit 112b, and the second preliminary parking backward voltage prevention element 111b may be included in or disposed in a second ECU A2. In this case, the second ECU A2 may be a redundant ECU.

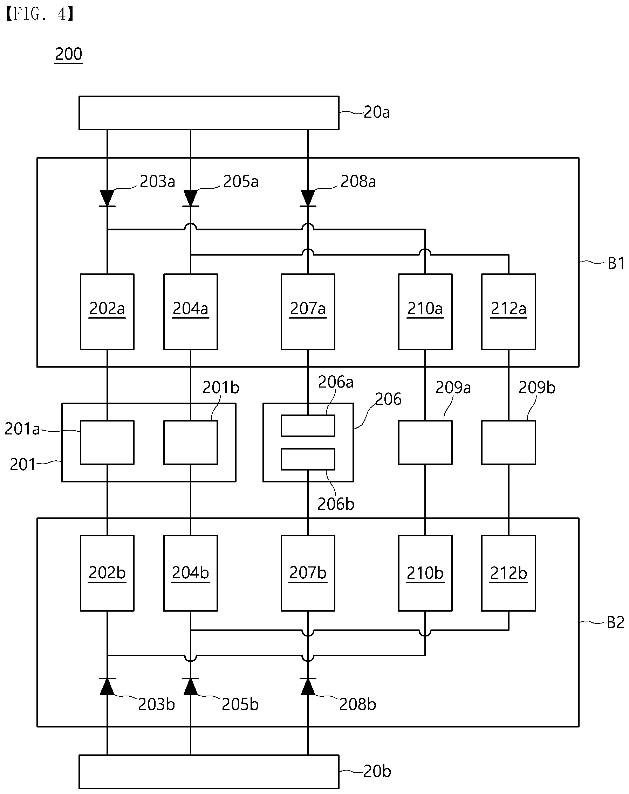

FIG. 4 is a diagram showing a configuration of an apparatus for braking control according to a second embodiment of the present disclosure.

An apparatus 200 for brake control according to the second embodiment of the present disclosure controls the supply of hydraulic pressure for braking of a vehicle. The apparatus 200 for brake control may control hydraulic pressure transmitted to brakes installed on the wheels of a vehicle. The contents described in relation to each component of the first embodiment of the present disclosure may also be applied to the second embodiment of the present disclosure, unless there are special circumstances.

Referring to FIG. 4, the apparatus 200 for brake control according to the second embodiment of the present disclosure may include a first valve group 201a and a second valve group 201b included or disposed in a hydraulic circuit 201, a first valve drive circuit 202a, a first parking brake motor 209a, a first parking drive circuit 210a, a first backward voltage prevention element 203a, a second valve drive circuit 204a, a second parking brake motor 209b, a second parking drive circuit 212a, and a second backward voltage prevention element 205a.

The first valve group 201a includes at least one valve arranged in the hydraulic circuit 201. In addition, the second valve group 201b is arranged in the hydraulic circuit 201 and includes at least one valve that is not included in the first valve group 201a. For example, the first valve group 201a includes half of the plurality of valves disposed in the hydraulic circuit 201, and the second valve group 201b includes the other half of the plurality of valves disposed in the hydraulic circuit 201, but not limited thereto.

The first parking brake motor 209a is provided separately from the hydraulic circuit 201 and generates at least a part of the braking force for parking the vehicle. In addition, the second parking brake motor 209b is provided separately from the hydraulic circuit 201 and the first parking brake motor 209a and generates at least a part of the braking force for parking the vehicle.

The first valve drive circuit 202a drives the valves included in the first valve group 201a. The first parking drive circuit 210a drives the first parking brake motor 209a.

The first backward voltage prevention element 203a is arranged to connect the first valve drive circuit 202a and the first parking drive circuit 210a, which are in parallel, with the power source. The first backward voltage prevention element 203a may be configured to block the backward voltage generated in the first valve drive circuit 202a or the first parking drive circuit 210a from affecting or being transmitted to the power source. In this case, the power source may be a first power source 20a.

The second valve drive circuit 204a drives the valves included in the second valve group 201b. The second parking drive circuit 212a drives the second parking brake motor 209b.

The second backward voltage prevention element 205a is arranged to connect the second valve drive circuit 204a and the second parking drive circuit 212a, which are connected in parallel, with the power source. The second backward voltage prevention element 205a may be configured to block the backward voltage generated in the second valve drive circuit 204a or the second parking drive circuit 212a from affecting or being transmitted to the power source. In this case, the power source may be a first power source 20a.

According to the apparatus 200 for brake control according to the second embodiment of the present disclosure, the first valve drive circuit 202a and the second valve drive circuit 204a are separated from each other, and the first backward voltage prevention element 203a and the second backward voltage prevention element 205a are separately and independently arranged from each other. Due to this configuration, a fault occurring in the first valve drive circuit 202a does not affect or is not transmitted to the second valve drive circuit 204a, and a fault occurring in the second valve drive circuit 204a does not affect or is not transmitted to the first valve drive circuit 202a.

In addition, in the second embodiment of the present disclosure, the first valve drive circuit 202a and the first parking drive circuit 210a are connected to the first backward voltage prevention element 203a, and the second valve drive circuit 204a and the second parking drive circuit 212a are connected to the second backward voltage prevention element 205a, so that the number of backward voltage prevention elements can be reduced compared to the first embodiment of the present disclosure in order to improve space efficiency and economic efficiency of the apparatus 200 for brake control.

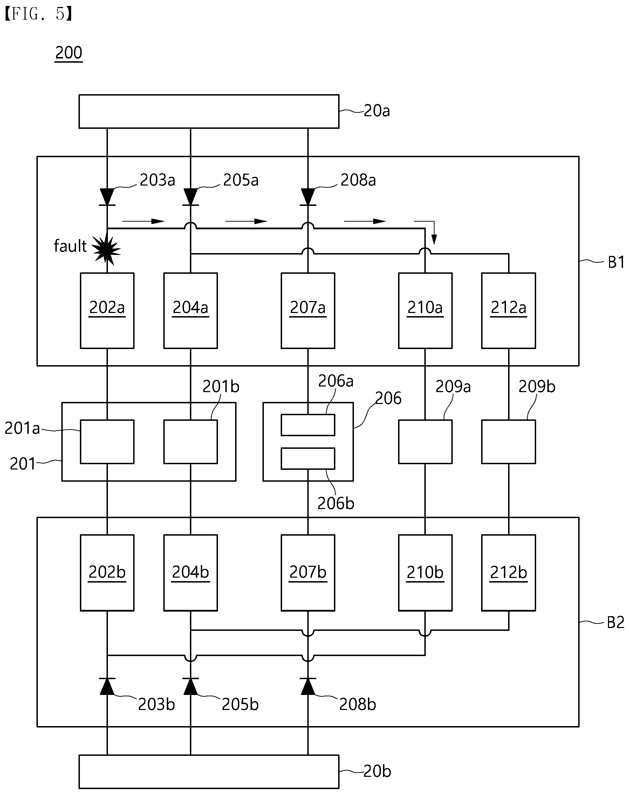

FIG. 5 shows an exemplary case in which a fault occurs in a first valve drive circuit of an apparatus for brake control according to the second embodiment of the present disclosure.

Referring to FIG. 5, an exemplary case in which a fault occurs in the first valve drive circuit 202a is shown. In more detail, FIG. 5 shows a situation in which a fault occurs due to overvoltage or short circuit between the first power source 20a and the first valve drive circuit 202a. This fault may be blocked from affecting or being transmitted to the first power source 20a by the first backward voltage prevention element 203a.

The second valve drive circuit 204a is separated from the first valve drive circuit 202a, and the second backward voltage prevention element 205a is provided between the second valve driving circuit 204a and the first power source 20a independently of the first backward voltage prevention element 203a, thereby preventing a fault occurring between the first power source 20a and the first valve drive circuit 202a from affecting the second valve drive circuit 204a.

However, in the case of the second embodiment of the present disclosure, both the first valve drive circuit 202a and the first parking drive circuit 210a are connected to the first backward voltage prevention element 203a, and a component or structure capable of blocking transmission of backward voltage is not arranged between the first valve drive circuit 202a and the first parking drive circuit 210a. Accordingly, a fault due to overvoltage or short circuit occurring in the first valve drive circuit 202a may affect or be transmitted to the first parking drive circuit 210a.

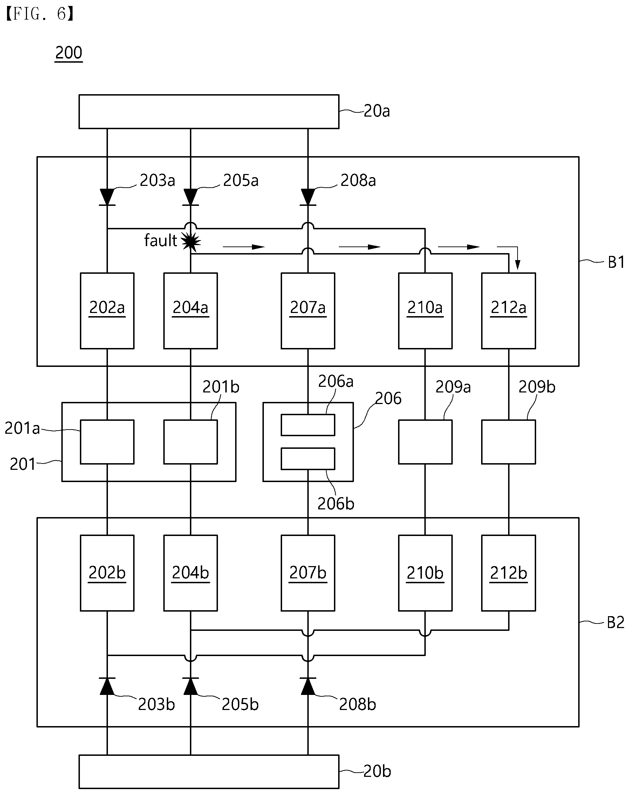

FIG. 6 shows an exemplary case in which a fault occurs in a second valve drive circuit of an apparatus for brake control according to the second embodiment of the present disclosure.

Referring to FIG. 6, an exemplary case in which a fault occurs in the second valve drive circuit 204a is shown. In more detail, FIG. 6 shows a situation in which a fault occurs due to overvoltage or short circuit between the first power source 20a and the second valve drive circuit 204a. This fault may be blocked from affecting or being transmitted to the first power source 20a by the second backward voltage prevention element 205a.

The first valve drive circuit 202a is separated from the second valve drive circuit 204a, and the first backward voltage prevention element 203a is provided between the first valve drive circuit 202a and the first power source 20a independently of the second backward voltage prevention element 205a, thereby preventing a fault occurring between the first power source 20a and the second valve drive circuit 204a from affecting the first valve drive circuit 202a.

However, in the case of the second embodiment of the present disclosure, both the second valve drive circuit 204a and the second parking drive circuit 212a are connected to the second backward voltage prevention element 205a, and a component or structure capable of blocking transmission of backward voltage is not arranged between the second valve drive circuit 204a and the second parking drive circuit 212a. Accordingly, a fault due to overvoltage or short circuit occurring in the second valve drive circuit 204a may affect or be transmitted to the second parking drive circuit 212a.

The apparatus 200 for brake control according to the second embodiment of the present disclosure may include a first preliminary valve drive circuit 202b, a first preliminary parking driving circuit 210b, a first preliminary backward voltage prevention element 203b, a second preliminary valve drive circuit 204b, a second preliminary parking drive circuit 212b, and a second preliminary backward voltage prevention element 205b.

The first preliminary valve drive circuit 202b may drive the valves included in the first valve group 201a in response to the failure of the first valve drive circuit 202a or together with the first valve drive circuit 202b. The first preliminary parking drive circuit 210b drives the first parking brake motor 209a in response to the failure of the first parking drive circuit 210a or together with the first parking drive circuit 210a.

The first preliminary backward voltage prevention element 203b is arranged to connect the first preliminary valve drive circuit 102b and the first preliminary parking drive circuit 210b, which are connected in parallel, with the power source. The first preliminary backward voltage prevention element 203b may be configured to block the backward voltage generated in the first preliminary valve drive circuit 202b or the first preliminary parking drive circuit 210b from affecting or being transmitted to the power source. In this case, the power source may be a second power source 20b.

The second preliminary valve drive circuit 204b may drive the valves included in the second valve group 201b in response to the failure of the second valve drive circuit 204a or together with the second valve drive circuit 204b. The second preliminary parking drive circuit 212b drives the second parking brake motor 209b in response to the failure of the second parking drive circuit 212a or together with the second parking drive circuit 212a.

The second preliminary backward voltage prevention element 205b is arranged to connect the second preliminary valve drive circuit 204b and the second preliminary parking drive circuit 212b, which are connected in parallel, with the power source The second preliminary backward voltage prevention element 205b may be configured to block the backward voltage generated in the second preliminary valve drive circuit 204b or the second preliminary parking drive circuit 212b from affecting or being transmitted to the power source. In this case, the power source may be a second power source 20b.

According to the apparatus 200 for brake control according to the second embodiment of the present disclosure, the first preliminary valve drive circuit 202b and the second preliminary valve drive circuit 204b are separated from each other, and the first preliminary backward voltage prevention element 203b and the second preliminary backward voltage prevention element 205b are separately and independently arranged from each other. Due to this configuration, a fault occurring in the first preliminary valve drive circuit 202b does not affect or is not transmitted to the second preliminary valve drive circuit 204b, and a fault occurring in the second preliminary valve drive circuit 204b does not affect or is not transmitted to the first preliminary valve drive circuit 202b.

In addition, in the case of the second embodiment of the present disclosure, the first preliminary valve drive circuit 202b and the first preliminary parking drive circuit 210b are connected to the first preliminary backward voltage prevention element 203b, and the second preliminary valve drive circuit 204b and the second preliminary parking drive circuit 212b are connected to the second preliminary backward voltage prevention element 205b, so that the number of backward voltage prevention elements can be reduced compared to the first embodiment of the present disclosure in order to improve space efficiency and economic efficiency of the apparatus 200 for brake control.

The apparatus 200 for brake control according to the second embodiment of the present disclosure may include a motor 206 including a first winding 206a and a second winding 206b, a first motor drive circuit 207a, a first motor backward voltage prevention element 208a, a second motor drive circuit 207b, and a second motor backward voltage prevention element 208b. Since these configurations are the same as or similar to those described with respect to the first embodiment of the present disclosure, detailed description is omitted.

Meanwhile, as described in connection with the first embodiment of the present disclosure, in the apparatus 200 for brake control according to the second embodiment of the present disclosure, the first backward voltage prevention element 203a, the first preliminary backward voltage prevention element 203b, the second backward voltage prevention element 205a, the second preliminary backward voltage prevention element 205b, the first motor backward voltage prevention element 208a, and the second motor backward voltage prevention element 208b may include, for example, but not limited to, a diode or/and a MOSFET. The first backward voltage prevention element 203a, the first preliminary backward voltage prevention element 203b, the second backward voltage prevention element 205a, the second preliminary backward voltage prevention element 205b, the first motor backward voltage prevention element 208a, and the second motor backward voltage prevention element 208b may be a one-way voltage or current switch configured to conduct voltage or current primarily in one direction (asymmetric conductance), and may have low (ideally zero) resistance in one direction and high (ideally infinite) resistance in the other direction.

In the second embodiment of the present disclosure, the first power source 20a and the second power source 20b may be arranged independently from each other. For example, the first power source 20a and the second power source 20b may include independent batteries, respectively. The first power source 20a and the second power source 20b may be the same power source. For example, the first power source 20a and the second power source 20b may be implemented as a single battery.

In addition, in the second embodiment of the present disclosure, the first valve drive circuit 202a, the first backward voltage prevention element 203a, the second valve drive circuit 204a, the second backward voltage prevention element 205a, the first motor drive circuit 207a, the first motor backward voltage prevention element 208a, the first parking drive circuit 210a, and the second parking drive circuit 212a may be disposed in a first ECU B1. In this case, the first ECU B1 may be a main ECU.

In addition, the first preliminary valve drive circuit 202b, the first preliminary backward voltage prevention element 203b, the second preliminary valve drive circuit 204b, the second preliminary backward voltage prevention element 205b, the second motor drive circuit 207b, the second motor backward voltage prevention element 208b, the first preliminary parking drive circuit 210b, and the second preliminary parking drive circuit 212b may be included or disposed in a second ECU B2. In this case, the second ECU B2 may be a redundant ECU .

According to the above configurations of some embodiments of the present disclosure, even if a fault occurs due to overvoltage or short circuit in one of a plurality of valve drive circuits configured to drive a plurality of valve groups arranged in a hydraulic circuit, respectively, an apparatus can prevent the fault associated with one drive circuit from affecting or being transmitted to remaining other drive circuits.

In addition, even when a fault occurs due to overvoltage or short circuit in one of a plurality of valve driving circuits configured to drive a plurality of valve groups, respectively, which are arranged in a hydraulic circuit configured to supply braking hydraulic pressure during the driving of the vehicle, an apparatus for brake control according to certain embodiments of the present disclosure can prevent the entire loss of braking force by preventing the fault associated with one drive circuit from affecting or being transmitted to the remaining other driving circuits.

In addition, an apparatus for brake control according to some embodiments of the present disclosure can achieve both redundancy and economic efficiency by linking a separation structure between a plurality of valve drive circuits configured to drive a plurality of valve groups, respectively, arranged in a hydraulic circuit supplying braking hydraulic pressure during driving of the vehicle and a separation structure between a plurality of parking drive circuits configured to drive a plurality of parking brake motors, respectively, that generate braking force for parking the vehicle.

It should be understood that the effects of the present disclosure are not limited to the above-described effects, and include all effects inferable from a configuration of the invention described in detailed descriptions or claims of the present disclosure.

Although embodiments of the present disclosure have been described, the spirit of the present disclosure is not limited by the embodiments presented in the specification. Those skilled in the art who understand the spirit of the present disclosure will be able to easily suggest other embodiments by adding, changing, deleting, or adding components within the scope of the same spirit, but this will also be included within the scope of the spirit of the present disclosure.

## Claims

1. An apparatus for brake control, comprising:
a first valve group comprising one or more first valves included in a hydraulic circuit configured to supply hydraulic pressure for braking of a vehicle;
a first valve drive circuit configured to drive the one or more first valves comprised in the first valve group;
a first backward voltage prevention element connected between the first valve drive circuit and a power source of the first valve drive circuit and configured to block backward voltage generated at a power source side of the first valve drive circuit;
a second valve group included in the hydraulic circuit and comprising one or more second valves;
a second valve drive circuit configured to drive the one or more second valves comprised in the second valve group; and
a second backward voltage prevention element connected between the second valve drive circuit and a power source of the second valve driving circuit and configured to block backward voltage generated at a power source side of the second valve drive circuit.

2. The apparatus for brake control of claim 1, wherein half of a plurality of valves included in the hydraulic circuit are the one or more first valves comprised in the first valve group, and remaining half of the plurality of valves included in the hydraulic circuit are the one or more second valves comprised in the second valve group.

3. The apparatus for brake control of claim 1, wherein at least one of the first backward voltage prevention element and the second backward voltage prevention element comprises a diode and/or a metal-oxide-semiconductor field-effect transistor (MOSFET).

4. The apparatus for brake control of claim 1, further comprising:
a first preliminary valve drive circuit configured to drive the one or more first valves comprised in the first valve group in response to failure of the first valve drive circuit; and
a first preliminary backward voltage prevention element connected between the first preliminary valve drive circuit and a power source of the first preliminary valve drive circuit and configured to block backward voltage generated at a power source side of the first preliminary valve drive circuit.

5. The apparatus for brake control of claim 4, further comprising:
a second preliminary valve drive circuit configured to drive the one or more second valves comprised in the second valve group in response to failure of the second valve drive circuit; and
a second preliminary backward voltage prevention element connected between the second preliminary valve drive circuit and a power source of the second preliminary valve drive circuit and configured to block backward voltage generated at a power source side of the second preliminary valve drive circuit.

6. The apparatus for brake control of claim 1, further comprising:
a motor having a first winding and a second winding and configured to generate hydraulic pressure to be supplied to the hydraulic circuit;
a first motor drive circuit configured to control electric power supplied to the first winding of the motor; and
a second motor drive circuit configured to control electric power supplied to the second winding of the motor.

7. The apparatus for brake control of claim 6, further comprising:
a first motor backward voltage prevention element connected between the first motor drive circuit and a power source of the first motor drive circuit and configured to block backward voltage caused by the first motor driving circuit; and
a second motor backward voltage prevention element connected between the second motor drive circuit and a power source of the second motor drive circuit and configured to block backward voltage caused by the second motor drive circuit.

8. The apparatus for brake control of claim 1, further comprising:
a first parking brake motor arranged separately from the hydraulic circuit and configured to generate at least a part of braking force for parking the vehicle;
a first parking drive circuit configured to drive the first parking brake motor;
a second parking brake motor arranged separately from the hydraulic circuit and the first parking brake motor and configured to generate at least a part of the braking force for parking the vehicle; and
a second parking drive circuit configured drive the second parking brake motor.

9. The apparatus for brake control of claim 8, further comprising:
a first parking backward voltage prevention element connected between the first parking drive circuit and a power source of the first parking drive circuit and configured to block backward voltage generated at a power source side of the first parking drive circuit; and
a second parking backward voltage prevention element connected between the second parking drive circuit and a power source of the second parking drive circuit and configured to block backward voltage generated at a power source side of the second parking drive circuit.

10. The apparatus for brake control of claim 8, further comprising:
a first preliminary parking drive circuit configured to drive the first parking brake motor in response to failure of the first parking drive circuit or together with the first parking drive circuit; and
a second preliminary parking drive circuit configured to drive the second parking brake motor in response to failure of the second parking drive circuit or together with the second parking drive circuit.

11. The apparatus for brake control of claim 10, further comprising:
a first preliminary parking backward voltage prevention element connected between the first preliminary parking drive circuit and a power source of the first preliminary parking drive circuit and configured to block backward voltage generated at a power source side of the first preliminary parking drive circuit; and
a second preliminary parking backward voltage prevention element connected between the second preliminary parking drive circuit and a power source of the second preliminary parking drive circuit and configured to block backward voltage generated at a power source side of the second preliminary parking drive circuit.

12. An apparatus for brake control, comprising:
a first valve group comprising one or more first valves included in a hydraulic circuit configured to supply hydraulic pressure for braking of a vehicle;
a first valve drive circuit configured to drive the one or more first valves comprised in the first valve group;
a first parking brake motor arranged separately from the hydraulic circuit and configured to generate at least a part of the braking force for parking the vehicle;
a first parking drive circuit configured to drive the first parking brake motor;
a first backward voltage prevention element connected between a first power source and the first valve driving circuit and the first parking driving circuit, which are connected in parallel, and configured to block backward voltage caused by the first valve drive circuit or the first parking drive circuit from being transmitted to the first power source;
a second valve group included in the hydraulic circuit and comprising one or more second valves;
a second valve drive circuit configured to drive the one or more second valves comprised in the second valve group;
a second parking brake motor arranged separately from the hydraulic circuit and the first parking brake motor, and configured to generate at least a part of the braking force for parking the vehicle;
a second parking drive circuit configured to drive the second parking brake motor; and
a second backward voltage prevention element connected between a second power source and the second valve drive circuit and the second parking drive circuit, which are in parallel, and configured to block backward voltage caused by the second valve drive circuit or the second parking drive circuit from being transmitted to the second power source.

13. The apparatus for brake control of claim 11, further comprising:
a first preliminary valve drive circuit configured to drive the one or more first valves comprised in the first valve group in response to failure of the first valve drive circuit;
a first preliminary parking driving circuit configured to drive the first parking brake motor in response to failure of the first parking drive circuit or together with the first parking drive circuit; and
a first preliminary backward voltage prevention element connected between the first power source and the first preliminary valve drive circuit and the first preliminary parking drive circuit, which are in parallel, and configured to block backward voltage caused by the first preliminary valve drive circuit or the first preliminary parking drive circuit from being transmitted to the first power source.

14. The apparatus for brake control of claim 13, further comprising:
a second preliminary valve drive circuit configured to drive the one or more second valves comprised in the second valve group in response to failure of the second valve drive circuit;
a second preliminary parking drive circuit configured to drive the second parking brake motor in response to failure of the second parking drive circuit or together with the second parking drive circuit; and
a second preliminary backward voltage prevention element connected between the second power source and the second preliminary valve drive circuit and the second preliminary parking drive circuit, which are in parallel, and configured to block backward voltage caused by the second preliminary valve drive circuit or the second preliminary parking drive circuit from being transmitted to the second power source.

15. The apparatus for brake control of claim 1, wherein the power source of the first valve drive circuit and the power source of the second valve driving circuit are a same single power source or different power sources.
